# EUROPÄISCHE PATENTSCHRIFT

(11) **EP 2 059 566 B1**
(45) Veröffentlichungstag und Bekanntmachung des Hinweises auf die Patenterteilung: **10.11.2010**
(21) Anmeldenummer: 07786708.3
(22) Anmeldetag: 22.08.2007
(51) Int. Cl.: C09D 1/04, C09J 11/02

(54) **BESCHICHTUNGS-, KLEBE- UND IMPRÄGNIERMITTEL, INSBESONDERE ALS BAU- UND RESTAURATIONSMATERIAL**
COATING, ADHESIVE, AND IMPREGNATING SUBSTANCE, PARTICULARLY AS A CONSTRUCTION AND RESTORATION MATERIAL
PRODUIT DE REVÊTEMENT, DE COLLAGE ET D'IMPRÉGNATION, EN PARTICULIER COMME MATÉRIAU DE CONSTRUCTION ET DE RÉFECTION

(30) Priorität: 31.08.2006 DE 202006013438 U
(43) Veröffentlichungstag der Anmeldung: 20.05.2009
(73) Patentinhaber: Zinck, Adalbert, 88316 Isny (DE)
(72) Erfinder: Zinck, Adalbert, 88316 Isny (DE)
(74) Vertreter: Brosch, Oliver
(86) Internationale Anmeldenummer: PCT/EP2007/007368
(87) Internationale Veröffentlichungsnummer: WO 2008/025466

(56) Entgegenhaltungen:
- GB-A- 626 741
- "Punisches Wachs" März 2004 (2004-03), KREIDEZEIT NATURFARBEN GMBH , CASSEMÜHLE 3, D-31196 SEHLEM , XP002459670 in der Anmeldung erwähnt das ganze Dokument
- DATABASE WPI Week 199505 Derwent Publications Ltd., London, GB; AN 1995-032877 XP002459671 & JP 06 316679 A (KAWADA T) 15. November 1994 (1994-11-15)

## Beschreibung

Die Erfindung betrifft ein Beschichtungs-, Klebe- und Imprägniermittel, insbesondere als Bau- und Restaurationsmaterial in Form einer verbesserten Rezeptur des bereits seit der Antike bekannten sogenannten "Punischen Wachses", nach dem Oberbegriff des unabhängigen Anspruches 1.

Dieses antike "Punische Wachs" ist eine Art "Natron-Wachs-Kalkseife", hergestellt aus Bienenwachs, das mit Meerwasser verkocht wurde. Es wurde als Farbenbindemittel für die Malerei und den Schiffsanstrich eingesetzt.

Eine ähnliche neuzeitlichere Rezeptur des "Punischen Wachses" der Kreidezeit Naturfarben GmbH, D-31196 Sehlem, geht von einem Bienenwachs aus, das geschmolzen, gereinigt und danach über Aktivkohle und Bleicherde gebleicht wird. Dieses derart gebleichte Wachs wird danach mit Pottasche verseift und dadurch teilweise wasserlöslich gemacht, so dass es leicht streich- und spachtelbar ist. Dieses neuere "Punische Wachs" wird für die Malerei, Stuckarbeiten und Restaurierung verwendet.

In der Patentschrift AT-376999 wird ein Verfahren zum Herstellen von Punischem Wachs aus Wüsten- und Steppengras beschrieben, nach dem gelber Wachsstaub dieser Gräser in gesättigter Salzlake unter Zugabe von Natronpulver (Steppensalzsee-Alkalien) gekocht wird, dann die schaumartig an der Oberfläche abgeschiedene wissbreiige Masse abgeschöpft und in kaltem Wasser abgeschreckt wird, worauf der vorhandene Wachskuchen durch wenigstens einmaliges Kochen in eisenoxydhaltigem Wasser und Abkühlen in reinem Wasser gereinigt und anschließend an der Sonne gebleicht wird, wobei das derart gereinigte und gebleichte Wachs einem Reaktionsbrennen mit Eisenkatalysatoren, z.B. Einsenspäne, unterworfen und ca. 3 Stunden lang auf einer Temperatur von ca. 300°C gehalten wird, worauf das abgekühlte und durch Kochen im Wasser vom Katalysator befreite Wachs wieder einer Sonnenbleiche ausgesetzt wird.

Der Begriff "Punisches Wachs" wird demnach durch keine eindeutige Rezeptur definiert. Das bekannte "Punische Wachs" besteht jedoch hauptsächlich aus Bienenwachs, welches durch entsprechende Verfahren gehärtet wird, wobei dieses Härteverfahren ein Kochen in Meerwasser einschließen kann, ein Verseifen mit Natronpulver oder Pottasche, sowie ein Versetzen mit Wasser.

Die DE 199 59 510 A1 hat ein Pflanzenbehandlungsmittel zum Gegenstand, welches auch zur Vorbeugung und Behandlung von Pilzbefall an Nutzpflanzen eingesetzt wird, mit folgender fungiziden Zusammensetzung:
1. Salze von Glycolat, Palmitat oder Stearat oder deren Kombinationen;
2. Lecithin, welches ein Phosphoglycerid ist und als Emulgator wirkt und einen Glycerin-Komplex (Alkohol) beinhaltet, sowie einen Palmitinsäure-Rest enthalten kann;
3. Natronwasserglas (Na₂SiO₂);
4. Kalziumcarbonat (K₂CO₃), welches auch unter dem Begriff "Pottasche" bekannt ist.

Diese Salze bilden mit Wasser verdünnt ein Esterprodukt aus Säure und Alkohol, wie z. B. Wachs, welches tierischen, pflanzlichen oder synthetischen Ursprungs sein könnte. Eine diesbezügliche genauere Beschreibung fehlt aber völlig.

Das bekannte "Punische Wachs" ist jedoch mit dem Nachteil verbunden, dass dieses nur relativ geringe Adhäsionseigenschaften aufweist und zudem leicht brennbar ist, und damit als Beschichtungs-, Klebe- und Imprägniermittel insbesondere als Bau- und Restaurierungsmaterial nicht oder nur bedingt geeignet ist.

Aufgabe der vorliegenden Erfindung ist es, ein Beschichtungs-, Klebe- und Imprägniermittel insbesondere als Bau- und Restaurierungsmaterial derart weiterzubilden, dass dieses verbesserte Adhäsionseigenschaften aufweist, sowie nicht oder nur sehr schwer brennbar ist.

Zur Lösung dieser Aufgabe dienen die Merkmale des unabhängigen Anspruches 1.

Wesentlich dabei ist, dass das Beschichtungs-, Klebe- und Imprägniermittel (im Folgenden auch "Punische Milch" genannt) "Punisches Wachs" aus mindestens Bienenwachs, Potasche (K₂CO₃) und Wasser (H₂O), sowie Natronwasserglas (Na₂SiO₂) beinhaltet.

Damit ergibt sich der wesentliche Vorteil, dass damit das an sich bekannte "Punische Wachs" durch Zusatz von Natronwasserglas (Na₂SiO₂) relativ hohe Adhäsionseigenschaften erhält und zudem feuerhemmend bis nicht brennbar wird.

Als besonders bevorzugte Rezeptur des Grundbestandteils des "Punischen Wachses" hat sich folgendes erwiesen:

Gelbes Bienenwachs (ungebleicht), Pottasche (K₂CO₃), Wasser insbesondere destilliert oder entkalkt (oder auch gereinigtes kalkarmes Regenwasser), sowie Honig- und/oder Zuckerlösung.

Bienenwachs als Hauptbestandteil des punischen Wachses beinhaltet zusätzlich zu langkettigen Alkoholen und Säuren noch die Bestandteile freie Kerotinsäure, Melissinsäure und ähnliche Säuren, sowie gesättigte Kohlenwasserstoffe, Alkohole und andere Stoffe, wie z. B. bienenartspezifische Aromastoffe.

Honig enthält 80% Zucker, 19% Wasser, 1% Wachs, Farbstoff und Enzyme, was eine enorme Klebeeigenschaft und Festigkeit des Punischen Wachses bewirkt.

### Beispiel bevorzugter Mischverhältnisse:

1 kg gelbes reines Bienenwachs
100 g Pottasche, aufgelöst in 0,5 Liter heißem dest. Wasser oder sauberem Regenwasser
0,5 Liter heiße Honig- und/oder Zuckerlösung mit 100 g Honig und/oder Zucker alles verdünnt mit 3 Liter dest. Wasser oder sauberem Regenwasser

### Beispiel eines bevorzugten Herstellungsverfahrens:

1 kg gelbes Bienenwachs wird in einem Topf von mind. 10 Liter Fassungsvermögen auf einer Herdplatte geschmolzen. Nachdem das Bienenwachs flüssig und heiß ist, wird langsam der halbe Liter aufgelöste Pottasche auch warm dazu gerührt. Die Pottaschenlösung darf nur immer in kleinen Mengen zugesetzt werden, wobei laufend die nun leicht schaumige Masse gerührt werden muss. Bei schneller Zugabe der Pottasche besteht die Gefahr des Überschäumens. Nach Einrühren wird nun die Honig- und/oder Zuckerlösung in heißem Zustand zugerührt. Danach wird kaltes Wasser in die heiße Wachsmasse eingebracht. Während der Verdünnung muss laufend gerührt werden. Nach nochmaligem kurzen Erhitzen wird der Topf mit einem Deckel abgedeckt und zum Auskühlen abgestellt. Es ist vorteilhaft, das so entstandene "Punische Wachs" von bester Qualität während des Abkühlvorganges ab und zu etwas umzurühren. Als cremige Substanz kann es nun in luftdicht verschließbare Gefäße abgefüllt werden. Derart luftdicht verschlossen hält das "Punische Wachs" bei kühler Lagerung ca. 2 bis 3 Jahre.

Aus diesem "Punischen Wachs", hergestellt wie oben beschrieben, wird nun die erfindungsgemäße "Punische Milch" bevorzugter Mischverhältnisse hergestellt:

### Beispiel 1:

1/8 Liter verdünntes cremiges "Punische Wachs", hergestellt wie oben beschrieben;
1/8 Liter dest. Wasser oder sauberes Regenwasser, in dem nochmals ein Esslöffel Honig und/oder Zucker aufgelöst wurde;
3/4 Liter Natronwasserglas (Na₂SiO₂).

### Beispiel 2:

1/4 Liter verdünntes cremiges "Punische Wachs", hergestellt wie oben beschrieben;
1/4 Liter dest. Wasser oder sauberes Regenwasser;
1/4 Liter flüssiges Borax-Kasein d.h. Natriumtetraborat (Na₂B₄O₇· 10 H₂O) mit Milch- und/oder Quark-Proteinen
1 1/4 Liter Natronwasserglas (Na₂SiO₂).

Nach gutem Schütteln ist die erfindungsgemäße "Punische Milch" gebrauchsfertig. Bei kühler Lagerung und in gut verschlossenen Plastikflaschen ist die erfindungsgemäße "Punische Milch" nach Beispiel 1 mind. 1 Jahr haltbar, nach Beispiel 2 mit Borax-Kasein ca. 3 Monate haltbar, aber für Witterungseinflüsse noch beständiger als ohne Borax-Kasein.

Diese erfindungsgemäße "Punische Milch" ist geruchlos, reizarm und vor allem unentzündlich.

### Verwendungsarten:

1.Mit der erfindungsgemäßen "Punischen Milch" lassen sich mittels Trockenpigmenten die unterschiedlichsten Feuerschutzfarben herstellen. Die Farben werden besonders hart und haften hervorragend auf unterschiedlichsten Materialien wie Holz, Karton, Stein, Putz und allen bemalbaren Untergründen.

2.Die erfindungsgemäße "Punische Milch" festigt morsches und weiches Holz durch Einlassen oder Einspritzung, so dass sie besonders auch für Restauratoren geeignet ist. Einsetzbar ist die erfindungsgemäße "Punische Milch" bei Holzrestaurierungen und Steinskulpturen. Bei Abplatzungen, z.B. an einer Marmorfigur lassen sich mühelos mit Marmorsand kleine wie große Schäden beheben. Der Sandteig erhält mit der erfindungsgemäßen "Punischen Milch" eine sehr gute Haftung und Härte. Auch eine anschließende Politur ist möglich.

3.Die Herstellung eines unbrennbaren Baumaterials ist durch die erfindungsgemäße "Punischen Milch" möglich. Wandverkleidungen, hergestellt aus Sägemehl, Spänen, allen Sandsorten, Marmormehlen, Papierabfällen und sogar getrocknetem Heu können verwirklicht werden. Alle Grundmaterialien lassen sich auch problemlos untereinander mischen, z.B. Holzsägemehl mit Quarzsand. Beide Materialien zusammen ergeben mit der erfindungsgemäßen "Punische Milch" im Verhältnis 1:1 einen unbrennbaren und interessanten neuen Baustoff.

4.Durch die hervorragende universelle Klebekraft lässt sich die erfindungsgemäße "Punischen Milch" in einem großen Bereich der Bildenden Kunst (bildende Künstler und Kunstlehrer) einsetzen. In der Malerei, der Gestaltung von Reliefs mit unterschiedlichen Materialien und der Holzgestaltung lässt dieses Mittel ungeahnte Möglichkeiten entstehen. Aus preisgünstigen Abfallprodukten können neue Werkstoffe und Werke geschaffen werden. Durch die einfache Handhabung ist dies auch in Schulen ein idealer neuer Werkstoff.

5.Die erfindungsgemäße "Punische Milch" ist zur Druckimprägnierung für Bauholz geeignet. Das so imprägnierte Holz ist damit nur sehr schwer oder nicht mehr entflammbar. Dachstühle alter denkmalgeschützter Häuser erhalten durch mehrmalige Behandlung mit der erfindungsgemäßen "Punische Milch" einen wesentlichen Schutz - dies betrifft auch den Insektenbefall von Bauholz.

## Patentansprüche

1. Beschichtungs-, Klebe- und Imprägniermittel (oder auch "Punische Milch"), insbesondere als Bau- und Restaurationsmaterial, beinhaltend sogenanntes "Punisches Wachs" aus mindestens Bienenwachs, Pottasche (K₂CO₃) und Wasser (H₂O), **dadurch gekennzeichnet, dass** das Beschichtungs-, Klebe- und Imprägniermittel zusätzlich Natronwasserglas (Na₂SiO₂) beinhaltet.

2. Beschichtungs-, Klebe- und Imprägniermittel nach Anspruch 1, **dadurch gekennzeichnet, dass** das Beschichtungs-, Klebe- und Imprägniermittel zusätzlich Honig- und/oder Zucker enthält, das dem "Punischen Wachs" in Form einer Honig- und/oder Zuckerlösung beigemengt ist.

3. Beschichtungs-, Klebe- und Imprägniermittel nach Anspruch 1 oder 2, **dadurch gekennzeichnet, dass** das Beschichtungs-, Klebe- und Imprägniermittel zusätzlich Borax-Kasein, d.h. Natriumtetraborat (Na₂B₄O₇· 10 H₂O) mit Milch- und/oder Quark-Proteinen, enthält, das dem fertigen "Punischen Wachs" beigemengt ist.

4. Beschichtungs-, Klebe- und Imprägniermittel nach einem der Ansprüche 1 bis 3, **dadurch gekennzeichnet, dass** das Bienenwachs des "Punischen Wachses" ungebleichtes, gelbes Bienenwachs ist.

5. Beschichtungs-, Klebe- und Imprägniermittel nach einem der Ansprüche 1 bis 4, **dadurch gekennzeichnet, dass** das "Punische Wachs" etwa zusammengesetzt ist aus 1 kg gelbes reines Bienenwachs, 100 g Pottasche, aufgelöst in 0,5 Liter heißem dest. Wasser oder sauberem Regenwasser, 0,5 Liter heiße Honig- und/oder Zuckerlösung mit 100 g Honig und/oder Zucker, alles verdünnt mit 3 Liter dest. Wasser oder sauberem Regenwasser.

6. Beschichtungs-, Klebe- und Imprägniermittel nach Anspruch 5, **dadurch gekennzeichnet, dass** das Beschichtungs-, Klebe- und Imprägniermittel, d.h. die "Punische Milch", etwa wie zusammengesetzt ist aus 1/8 Liter verdünntem cremigem "Punischem Wachs", 1/8 Liter dest. Wasser oder sauberem Regenwasser, in dem nochmals ein Esslöffel Honig und/oder Zucker aufgelöst ist, 3/4 Liter Natronwasserglas (Na₂SiO₂).

7. Beschichtungs-, Klebe- und Imprägniermittel nach Anspruch 5, **dadurch gekennzeichnet, dass** das Beschichtungs-, Klebe- und Imprägniermittel, d.h. die "Punische Milch", etwa zusammengesetzt ist aus 1/4 Liter verdünntem cremigem "Punischem Wachs", 1/4 Liter dest. Wasser oder sauberes Regenwasser, 1/4 Liter flüssigem Borax-Kasein (Na₂B₄O₇· 10 H₂O mit Milch- und/oder Quark-Proteinen), 1,25 Liter Natronwasserglas (Na₂SiO₂).

8. Beschichtungs-, Klebe- und Imprägniermittel nach einem der Ansprüche 1 bis 7, **dadurch gekennzeichnet, dass** das Beschichtungs-, Klebe- und Imprägniermittel Farbpigmente insbesondere in Form von Trockenpigmenten, Sand insbesondere Quarzsand, Holz-Sägemehl, HolzSpäne, Steinmehle insbesondere Marmormehle, Papier insbesondere aus Recyclingpapier, Pappe oder pflanzliche Bestandteile wie Heu oder Stroh enthält, oder aber beliebige Kombinationen aus einigen oder allen der zuvor genannten Stoffe.

9. Beschichtungs-, Klebe- und Imprägniermittel nach Anspruch 8, **dadurch gekennzeichnet, dass** das Beschichtungs-, Klebe- und Imprägniermittel Holzsägemehl sowie Quarzsand enthält, insbesondere im Verhältnis 1:1.

10. Beschichtungs-, Klebe- und Imprägniermittel nach einem der Ansprüche 1 bis 9, **dadurch gekennzeichnet, dass** das Wasser des "Punischen Wachses" und/oder der "Punischen Milch" destilliertes Wasser und/oder von Feststoffen gereinigtes Regenwasser ist.

## Claims

1. Coating, bonding and impregnating composition (or alternatively "Punic Milk"), particularly as a construction and restoration material, comprising "Punic Wax" composed at least of beeswax, potash (K₂CO₃) and water (H₂O), **characterized in that** the coating, bonding and impregnating composition further comprises sodium silicate (Na₂SiO₂).

2. Coating, bonding and impregnating composition according to Claim 1, **characterized in that** the coating, bonding and impregnating composition further comprises honey and/or sugar which has been admixed to the "Punic Wax" in the form of a honey solution and/or sugar solution.

3. Coating bonding and impregnating composition according to Claim 1 or 2, **characterized in that** the coating, bonding and impregnating composition further comprises borax casein, i.e. sodium tetraborate (Na₂B₄O₇· 10 H₂O) with milk proteins and/or quark proteins, which has been admixed to the completed "Punic Wax".

4. Coating bonding and impregnating composition according to any of Claims 1 to 3, **characterized in that** the beeswax of the "Punic Wax" is unbleached, yellow beeswax.

5. Coating bonding and impregnating composition according to any of Claims 1 to 4, **characterized in that** the "Punic Wax" is for instance composed of 1 kg of yellow pure beeswax, 100 g of potash, dissolved in 0.5 liter of hot distilled water or clean rainwater, 0.5 liter of hot honey solution and/or sugar solution with 100 g of honey and/or sugar, all diluted with 3 liters of distilled water or clean rainwater.

6. Coating bonding and impregnating composition according to Claim 5, **characterized in that** the coating, bonding and impregnating composition, i.e. the "Punic Milk", is for instance composed of 1/8 liter of dilute creamy "Punic Wax", 1/8 liter of distilled water or clean rainwater, in which additionally a tablespoon of honey and/or sugar has been dissolved, 3/4 liter of sodium silicate (Na₂SiO₂).

7. Coating bonding and impregnating composition according to Claim 5, **characterized in that** the coating, bonding and impregnating composition, i.e. the "Punic Milk", is for instance composed of 1/4 liter of dilute creamy "Punic Wax", 1/4 liter of distilled water or clean rainwater, 1/4 liter of liquid borax casein (Na₂B₄O₇· 10 H₂O with milk proteins and/or quark proteins), 1.25 liter of sodium silicate (Na₂SiO₂).

8. Coating bonding and impregnating composition according to any of Claims 1 to 7, **characterized in that** the coating, bonding and impregnating composition comprises color pigments, especially in the form of dry pigments, sand, especially quartz sand, sawdust, woodchips, rock flours, especially marble flours, paper, especially comprising recycled paper, cardboard or plant constituents such as hay or straw, or else any desired combinations of some or all of the aforementioned substances.

9. Coating bonding and impregnating composition according to Claim 8, **characterized in that** the coating, bonding and impregnating composition comprises sawdust and also quartz sand, in particular in a ratio of 1:1.

10. Coating bonding and impregnating composition according to+ any of Claims 1 to 9, **characterized in that** the water of the "Punic Wax" and/or of the "Punic Milk" is distilled water and/or rainwater which has been cleaned of solids.

## Revendications

1. Agent de revêtement, adhésif et d'imprégnation (ou également "lait punique"), en particulier comme matériau de construction et de restauration, comprenant ce qu'on appelle de la "cire punique" constituée au moins par de la cire d'abeille, de la potasse (K₂CO₃) et de l'eau (H₂O), **caractérisé en ce que** l'agent de revêtement, adhésif et d'imprégnation contient en outre du verre soluble sodique (Na₂SiO₂).

2. Agent de revêtement, adhésif et d'imprégnation selon la revendication 1, **caractérisé en ce que** l'agent de revêtement, adhésif et d'imprégnation contient en outre du miel et/ou du sucre, qui est mélangé à la "cire punique" sous forme d'une solution de miel et/ou de sucre.

3. Agent de revêtement, adhésif et d'imprégnation selon la revendication 1 ou 2, **caractérisé en ce que** l'agent de revêtement, adhésif et d'imprégnation contient en outre de la caséine de borax, c'est-à-dire du tétraborate de sodium (Na₂B₄O₇·10H₂O) avec des protéines de lait et/ou de fromage blanc, qui est mélangé à la "cire punique" finie.

4. Agent de revêtement, adhésif et d'imprégnation selon l'une quelconque des revendications 1 à 3, **caractérisé en ce que** la cire d'abeille de la "cire punique" est une cire d'abeille jaune, non blanchie.

5. Agent de revêtement, adhésif et d'imprégnation selon l'une quelconque des revendications 1 à 4, **caractérisé en ce que** la "cire punique" est constituée par environ 1 kg de cire d'abeille jaune pure, 100 g de potasse, dissoute dans 0,5 litre d'eau distillée ou d'eau de pluie pure chaude, 0,5 litre de solution chaude de miel et/ou de sucre avec 100 g de miel et/ou de sucre, le tout dilué avec 3 litres d'eau distillée ou d'eau de pluie pure.

6. Agent de revêtement, adhésif et d'imprégnation selon la revendication 5, **caractérisé en ce que** l'agent de revêtement, adhésif et d'imprégnation, c'est-à-dire le "lait punique" est constitué par environ 1/8 de litre de "cire punique" crémeuse diluée, 1/8 de litre d'eau distillée ou d'eau de pluie pure, dans laquelle est à son tour dissoute une cuillère à soupe de miel et/ou de sucre, 3/4 de litre de verre soluble sodique (Na₂SiO₂).

7. Agent de revêtement, adhésif et d'imprégnation selon la revendication 5, **caractérisé en ce que** l'agent de revêtement, adhésif et d'imprégnation, c'est-à-dire le "lait punique" est constitué par environ 1/4 de litre de "cire punique" crémeuse diluée, 1/4 de litre d'eau distillée ou d'eau de pluie pure, 1/4 de litre de caséine de borax liquide (Na₂B₄O₇·10H₂O avec des protéines de lait et/ou de fromage blanc), 1,25 litre de verre soluble sodique (Na₂SiO₂).

8. Agent de revêtement, adhésif et d'imprégnation selon l'une quelconque des revendications 1 à 7, **caractérisé en ce que** l'agent de revêtement, adhésif et d'imprégnation contient des pigments colorés, en particulier sous forme de pigments secs, du sable, en particulier le sable de quartz, de la sciure de bois, des copeaux de bois, de la pierre pulvérisée, en particulier de marbre, du papier, en particulier le papier recyclé, du carton ou des constituants végétaux, tels que du foin ou de la paille ou encore des combinaisons quelconques de quelques-unes ou de toutes les substances susmentionnées.

9. Agent de revêtement, adhésif et d'imprégnation selon la revendication 8, **caractérisé en ce que** l'agent de revêtement, adhésif et d'imprégnation contient de la sciure de bois ainsi que du sable de quartz, en particulier dans un rapport 1:1.

10. Agent de revêtement, adhésif et d'imprégnation selon l'une quelconque des revendications 1 à 9, **caractérisé en ce que** l'eau de la "cire punique" et/ou du "lait punique" est de l'eau distillée et/ou de l'eau de pluie purifiée des solides.
